# EUROPEAN PATENT APPLICATION

(11) **EP 4 738 247 A1**
(43) Date of publication of application: **06.05.2026**
(21) Application number: 24851423.4
(22) Date of filing: 24.06.2024
(51) Int. Cl.: G06T 7/00

(54) **LEARNING IMAGE GENERATION METHOD, LEARNING IMAGE GENERATION DEVICE, LEARNING IMAGE GENERATION PROGRAM, AND LEARNING MODEL GENERATION METHOD**

(30) Priority: 04.08.2023 JP 2023127926
(71) Applicant: Mitsubishi Heavy Industries Machinery Systems, Ltd., Kobe-shi, Hyogo 652-8585 (JP)
(72) Inventor: NISHIMORI, Toshiaki, Kobe-shi, Hyogo 652-8585 (JP); IENAGA, Kengo, Kobe-shi, Hyogo 652-8585 (JP); IEHARA, Masato, Tokyo 100-8332 (JP)
(74) Representative: Hoffmann Eitle
(86) International application number: PCT/JP2024/022748
(87) International publication number: WO 2025/032990

(57) **Abstract**

This training image generation method includes: a translation step for generating a translated image by translating a source image which includes a target region so as to reduce the discriminability thereof; and an association step for generating a training image in which the translated image and information about the translation target region corresponding to the target region in the translated image are associated with one another as an associative relationship for training a learning model, and using the information about the target region in the source image as translation target region information.

## Description

### Technical Field

The present disclosure relates to a training image generation method, a training image generation device, a training image generation program, and a learning model generation method.

### Background Art

In a case of generating a learning model configured to extract a target region included in an image, a large number of training images in which the image and the target region are associated with each other are required. As a technology for generating the training images, for example, a technology described in PTL 1 is known.

### Citation List

### Patent Literature

[PTL 1] Japanese Patent No. 7164008

### Summary of Invention

### Technical Problem

**In** a case where the above-described training image is generated, it is required to perform association between the image and the target region with high accuracy.

The present disclosure has been made in view of the above-described circumstances, and an object of the present disclosure is to provide a training image generation method, a training image generation device, a training image generation program, and a learning model generation method capable of generating a training image in which accuracy of association between an image and a target region is high as a training image for generating a learning model configured to extract the target region included in the image.

### Solution to Problem

A training image generation method according to the present disclosure includes: a translation step of translating a source image including a target region such that identifiability is lowered to generate a translated image; and an association step of generating a training image in which the translated image and information on a translation target region corresponding to the target region in the translated image are associated with each other as a correspondence relationship with which a learning model is trained, information on the target region in the source image being used as the information on the translation target region.

A training image generation program according to the present disclosure causes a computer to execute: a translation process of translating a source image including a target region such that identifiability is lowered to generate a translated image; and an association process of generating a training image in which the translated image and information on a translation target region corresponding to the target region in the translated image are associated with each other as a correspondence relationship with which a learning model is trained, information on the target region in the source image being used as the information on the translation target region.

A training image generation device according to the present disclosure includes: a generation unit configured to convert a source image including a target region such that identifiability is lowered to generate a translated image; and an association unit configured to generate a training image in which the translated image and information on a translation target region corresponding to the target region in the translated image are associated with each other as a correspondence relationship with which a learning model is trained, information on the target region in the source image being used as the information on the translation target region.

A learning model generation method according to the present disclosure includes: a training image generation step of generating a training image by the training image generation method; and a training step of training a learning model with the generated training image.

### Advantageous Effects of Invention

According to the present disclosure, it is possible to generate a training image in which accuracy of association between an image and a target region is high as a training image for generating a learning model configured to extract a target region included in the image.

### Brief Description of Drawings

FIG. 1 is a functional block diagram illustrating an example of a training image generation device according to an embodiment.
FIG. 2 is a view schematically illustrating an example of a source image.
FIG. 3 is a view schematically illustrating an example of a translated image.
FIG. 4 is a view schematically illustrating an example of a training image.
FIG. 5 is a flowchart illustrating an example of a training image generation method according to the present embodiment.
FIG. 6 is a view schematically illustrating an example of a case where a learning model is generated based on the training image.
FIG. 7 is a flowchart illustrating an example of a learning model generation method according to the present embodiment.
FIG. 8 is a view schematically illustrating an example of an operation of the learning model.
FIG. 9 is a graph illustrating an example of a ground truth rate of a target region which is output when a captured image is input to the learning model.
FIG. 10 is a view illustrating another example of the source image.
FIG. 11 is a view illustrating another example of the source image.

### Description of Embodiments

Hereinafter, embodiments of a training image generation method, a training image generation device, a training image generation program, and a learning model generation method according to the present disclosure will be described with reference to the drawings. Note that the present invention is not limited to the embodiments. **In** addition, components in the embodiments described below include those that can be easily replaced by those skilled in the art, or those that are substantially the same.

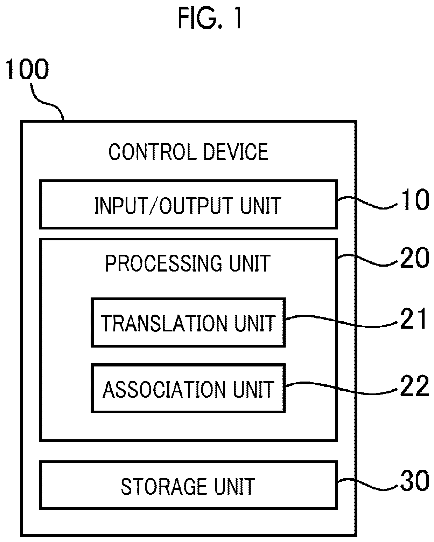

FIG. 1 is a functional block diagram illustrating an example of a training image generation device according to the present embodiment. As illustrated in FIG. 1, a training image generation device 100 includes an input/output unit 10, a processing unit 20, and a storage unit 30.

The input/output unit 10 is an input/output interface that inputs a signal from an external device and outputs a signal to an external device. A source image (to be described later) is input to the input/output unit 10 from an external device such as an imaging device. The input source image can be stored in, for example, the storage unit 30. In addition, the input/output unit 10 can output the source image, a translated image, and a training image to be described later.

The processing unit 20 performs various types of information processing. The processing unit 20 includes a processor such as a central processing unit (CPU), and a memory such as a read only memory (ROM) and a random access memory (RAM). The processing unit 20 includes a translation unit 21 and an association unit 22.

The translation unit 21 generates a translated image by translating the source image including a target region such that the identifiability is lowered. The translation unit 21 can store the generated translated image in the storage unit 30. The target region is a part of the source image. Examples of the target region include a portion including a predetermined object in the source image.

For example, the source image can be an image captured by the imaging device. Note that in the present embodiment, the image is not limited to the image captured by the imaging device, and may be data acquired by other types of sensors such as optical distance measurement data measured by an optical distance sensor such as a LiDAR sensor or radio wave distance measurement data measured by a radio wave distance measuring sensor such as a radar sensor. In this case, each of pieces of data such as the optical distance measurement data and the radio wave distance measurement data can be used as data in which measurement values are arranged in a two-dimensional shape, that is, as data equivalent to an image similarly to an image in which pixels are arranged in a two-dimensional shape. In the following description, the data such as the optical distance measurement data and the radio wave distance measurement data arranged in a two-dimensional shape as described above will also be described as being included in an "image".

As the source image, for example, an image of which identifiability is higher than a threshold value can be used. The source image can be an image detected under a condition in which a disturbance is the least such as daytime in sunny weather. Examples of the disturbance include weather conditions such as rain, snow, and fog, and sunlight conditions such as dawn, evening, nighttime, and backlight.

In the present embodiment, for example, in a case of a source image captured by the imaging device, the identifiability can be visibility of the source image. The visibility can be represented, for example, by a contrast of at least one of luminance and luminosity of the source image. In addition, in a case of each of the pieces of data such as the optical distance measurement data and the radio wave distance measurement data, the identifiability can be represented by an S/N ratio of a measurement value or the like.

**In** the present embodiment, the source image can be an image of which the identifiability (contrast of at least one of luminance and luminosity) is higher than or equal to a threshold value. **In** addition, the translated image can be an image of which identifiability is lower than the threshold value. **In** this case, the translation unit 21 generates a translated image by translating the source image of which identifiability is higher than the threshold value such that the identifiability becomes lower than the threshold value. The translated image can be an image of which identifiability is lower than the above threshold value.

The translation unit 21 can lower the identifiability, for example, by adding a disturbance to the source image. The translation unit 21 can convert the source image, for example, by using a disturbance image such as an image indicating each weather condition such as rain, snow, and fog, and an image indicating each sunlight condition such as dawn, evening, nighttime, and backlight.

The translation unit 21 can generate a translated image, for example, through learning using a neural network. **In** this case, for example, when the source image and the disturbance image are input, the translation unit 21 can generate the translated image by using a technology called a generative adversarial network (GAN) or a technology called a cycle generative adversarial network (Cycle GAN). **In** addition, the translation unit 21 can generate the translated image by using a technology called a diffusion model.

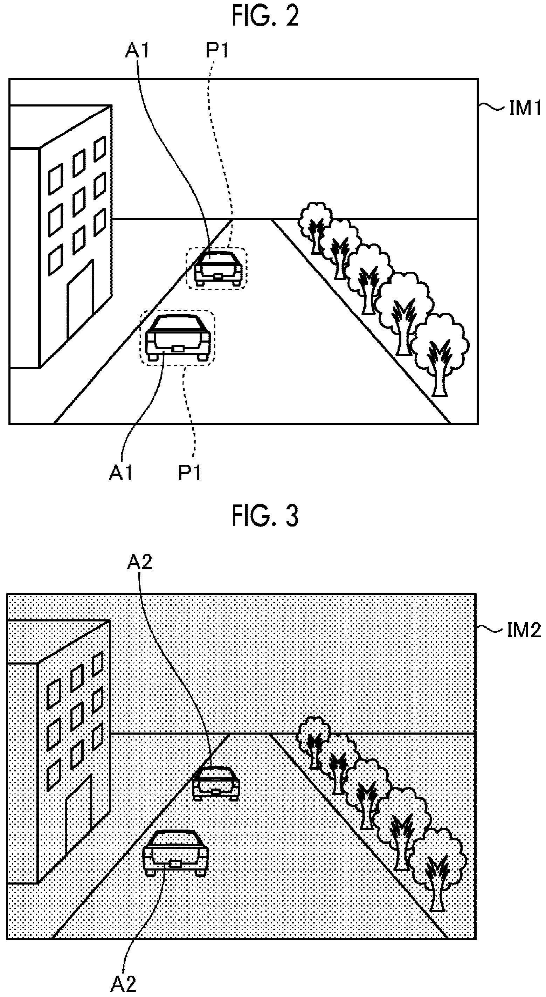

FIG. 2 is a view schematically illustrating an example of the source image. A source image IM1 illustrated in FIG. 2 is an image captured from the front of a vehicle in a traveling state during daytime in a fine weather. The source image IM1 includes an image of a preceding vehicle A1 running in front of a host vehicle. The source image IM1 is in a state in which a portion including the image of the preceding vehicle A1 is specified as a target region P1. In a case of specifying the target region P1, for example, an operator can identify the preceding vehicle A1 by looking at the source image IM1 and can manually set an identified range as the target region P1. Note that the target region P1 may be specified by performing image processing on the source image IM1. Note that the target region P1 is not limited to the preceding vehicle A1, and may be, for example, another object or person such as a pedestrian, a signal, a sign, a motorcycle, or a bicycle.

FIG. 3 is a view schematically illustrating an example of the translated image. A translated image IM2 illustrated in FIG. 3 is an image in which a disturbance is added to the source image IM1 to lower the identifiability. The translated image IM2 includes an image of a preceding vehicle A2 running in front of the host vehicle. The translated image IM2 can have the same number of pixels as that of the source image IM1. In this case, a position and a range of the preceding vehicle A2 in the translated image IM2 are the same as a position and a range of the preceding vehicle A1 in the source image IM1.

The association unit 22 generates a training image based on the translated image. The association unit 22 can store the generated training image in the storage unit 30. The training image is data in which the translated image and information on the target region in the source image are associated with each other as a correspondence relationship with which the learning model is trained. That is, the training image is data in which the association is performed by using the information on the target region in the source image as information on a translation target region that is a portion corresponding to the target region of the source image in the translated image. In a case where two-dimensional pixel arrays of the source image and the translated image are the same, two-dimensional coordinates of each pixel constituting the target region in the source image and two-dimensional coordinates of each pixel constituting the translation target region in the translated image are the same. In this case, the association unit 22 can associate a position and a range of a specified target region with the translated image as the information on the target region.

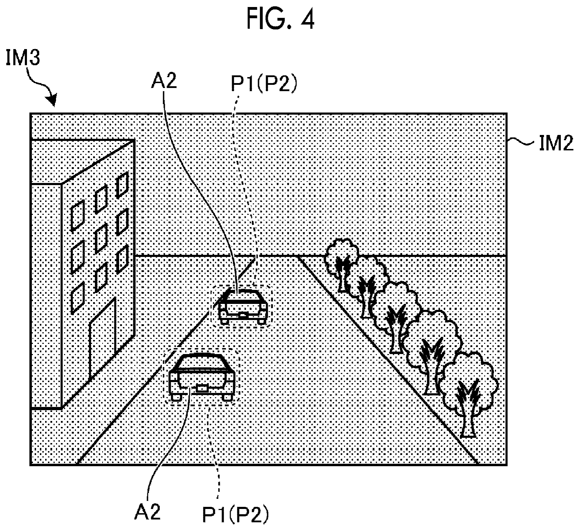

FIG. 4 is a view schematically illustrating an example of the training image. In a case of a training image IM3 illustrated in FIG. 4, the translated image IM2 and the information on the target region P1 in the source image are associated with each other as a correspondence relationship with which the learning model is trained. The position and the range of the translation target region P2 in the translated image IM2 are the same as the position and the range of the target region P1 in the source image IM1. In the present embodiment, since the two-dimensional pixel arrays of the source image IM1 and the translated image IM2 are the same, the association unit 22 can set the information on the target region P1 such that the two-dimensional coordinates of each pixel constituting the target region P1 in the source image IM1 and the two-dimensional coordinates of each pixel constituting the translation target region P2 in the translated image IM2 are the same.

The training image IM3 generated by the association unit 22 is data in which information on the target region P1 is associated with the translated image IM2 of which visibility is low. For example, when an operator looks at the translated image IM2 to identify the preceding vehicle A2 and manually sets the identified range as the translation target region P2, the preceding vehicle A2 may not be sufficiently identified from the translated image IM2 of which visibility is low, and there is a possibility that the preceding vehicle A2 may be overlooked. For this reason, there is a possibility that the training image IM3 in which accuracy of the association between the translated image IM2 and the translation target region P2 is not sufficient is generated. In contrast, in the present embodiment, the information on the target region P1 is specified based on the source image IM1 of which visibility is higher than the translated image IM2, and the training image IM3 in which the information on the target region P1 is associated with the translated image IM2 as the information on the translation target region P2 is generated. Therefore, the training image IM3 in which the accuracy of the association between the translated image IM2 and the translation target region P2 is high can be generated.

The storage unit 30 stores information such as various programs and data. The storage unit 30 includes a storage such as a hard disk drive (HDD) or a solid state drive (SSD). The storage unit 30 can store the source image input from the input/output unit 10. The storage unit 30 can store the translated image generated by the translation unit 21 and the training image generated by the association unit 22.

The storage unit 30 stores a training image generation program that causes a computer to execute, for example, a translation process of translating a source image including a target region such that identifiability is lowered to generate a translated image, and an association process of generating a training image in which the translated image and information on a translation target region corresponding to the target region in the translated image are associated with each other as a correspondence relationship with which a learning model is trained, information on the target region in the source image being used as the information on the translation target region.

In the training image generation device 100, the processor reads out various programs in the processing unit 20 and develops the programs in the memory to execute information processing corresponding to the function of each of the above-described units. Examples of various programs include a program stored in the storage unit 30, a program recorded on an external recording medium, and the like. The training image generation device 100 functions as an information processing device (computer) that executes various types of information processing. Note that another information processing device different from the training image generation device 100 may execute various programs, or the training image generation device 100 and another information processing device may cooperate with each other to execute various programs.

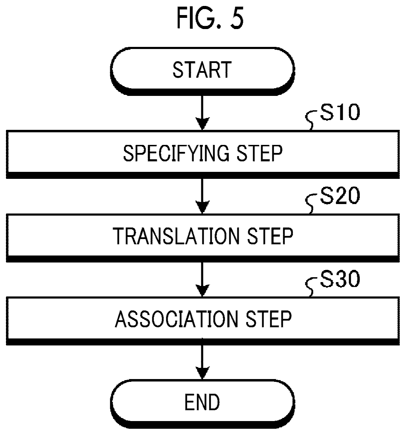

FIG. 5 is a flowchart illustrating an example of the training image generation method according to the present embodiment. As illustrated in FIG. 5, the training image generation method according to the present embodiment includes a specifying step S10, a translation step S20, and an association step S30.

In the specifying step S10, the position and the range of the target region P1 in the source image IM1 are specified as information on the target region P1. In the specifying step S10, for example, an operator can identify the preceding vehicle A1 by looking at the source image IM1 and can manually set an identified range as the target region P1. Note that the target region P1 may be specified by performing image processing on the source image IM1.

In the translation step S20, the source image IM1 including the target region P1 is translated such that the identifiability is lowered to generate the translated image IM2.

In the association step S30, the training image IM3 in which the translated image IM2 and the information on the target region P1 in the source image IM1 are associated with each other as a correspondence relationship with which the learning model is trained is generated.

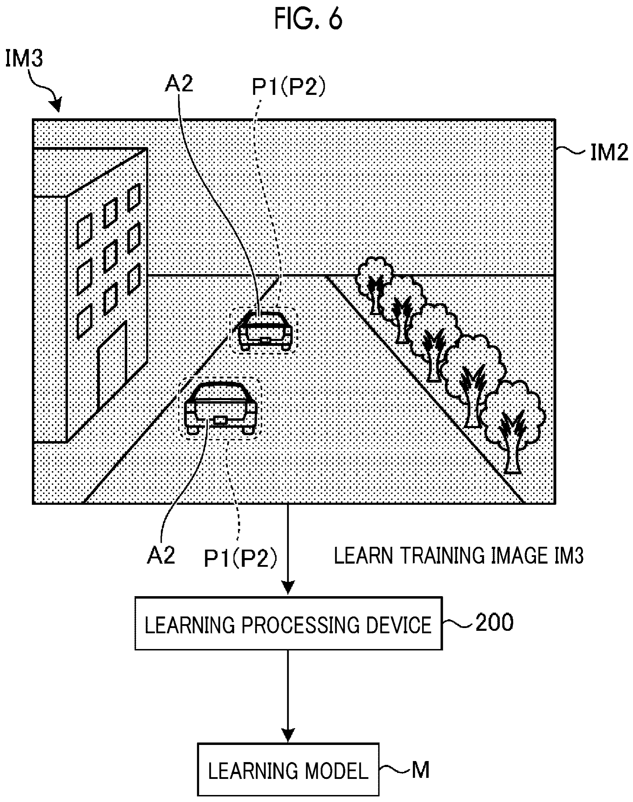

By training with the training image IM3 generated as described above, the learning model can be generated. FIG. 6 is a view schematically illustrating an example of a case where a learning model is generated based on the training image IM3. Note that the learning processing device 200 illustrated in FIG. 6 is a computer including a processor (not illustrated) such as a CPU, a memory (not illustrated) such as a ROM or a RAM, a storage (not illustrated) such as an HDD or an SSD, and an input/output interface (not illustrated). The learning processing device 200 stores a program, data, or the like for generating a learning model based on the training image IM3.

In a case where the training image IM3 generated as described above is input, the learning processing device 200 illustrated in FIG. 6 generates a learning model M by learning the input training image IM3 through machine learning. The learning processing device 200 can store the generated learning model M in the storage.

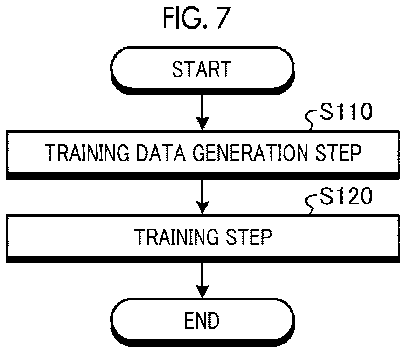

FIG. 7 is a flowchart illustrating an example of the learning model generation method according to the present embodiment. As illustrated in FIG. 7, the learning model generation method according to the present embodiment includes a training image generation step S110 and a training step S120.

The training image generation step S110 is a step of generating the training image IM3, and may include at least the translation step S20 and the association step S30 (refer to FIG. 5) described above, and may include the specifying step S10 (refer to FIG. 5).

In the training step S120, the generated training image IM3 is input to the learning processing device 200, and the learning processing device 200 learns the training image IM3. In this manner, the learning model M can be generated. Note that in the training step S120, the training image in which the source image IM1 and the target region P1 are associated with each other may be input to the learning processing device 200, and the learning processing device 200 may learn the training image.

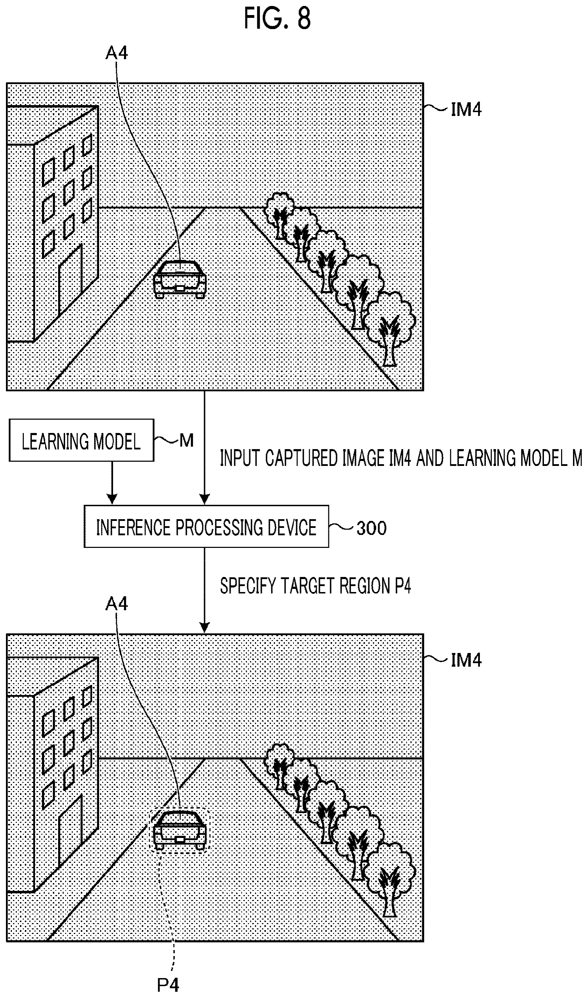

FIG. 8 is a view schematically illustrating an example of an operation of the learning model M. In FIG. 8, a case where a captured image IM4 including a target A4 is input to an inference processing device 300 will be described. The captured image IM4 is an image captured in front of a vehicle in a running state. In addition, the captured image IM4 is an image captured in a state in which it is not sunny and it is not daytime, for example, in a state in which each of the weather conditions such as rain, snow, and fog occurs, or in a state in which each of the sunlight conditions such as dawn, evening, nighttime, and backlight occurs. Therefore, the captured image IM4 is an image of which identifiability (visibility) is lower than the source image IM1.

The inference processing device 300 inputs the captured image IM4 and the learning model M generated as described above. The inference processing device 300 specifies a target region P4 in the input captured image IM4, that is, a portion in which the target A4 included in the captured image IM4 is included based on the learning result of the correspondence relationship between the translated image IM2 of which visibility is low and the information on the corresponding portion P1 of the source image IM1, and outputs the specifying result.

Note that when the learning model M is generated, in a case where a training image in which the source image IM1 and the target region P1 are associated with each other is used for training, an image captured on a sunny day and daytime can be input to the learning processing device 200 as the captured image. In this case, the captured image and the learning model M are input to the inference processing device 300. The inference processing device 300 can specify the target region in the input captured image based on the learning result of the correspondence relationship between the source image IM1 of which visibility is high and the target region P1 in the source image IM1, and can output the specifying result.

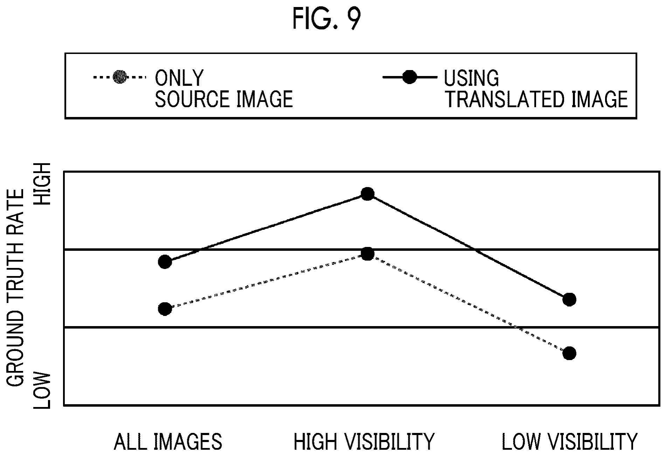

FIG. 9 is a graph illustrating an example of a ground truth rate of a target region that is output in a case where the captured image and the learning model M are input to the inference processing device 300. In FIG. 9, the vertical axis indicates the height of the ground truth rate. In addition, the "all images" on the horizontal axis indicates results for all of captured images to be input. **In** addition, "high visibility" indicates a result for an image of which visibility is higher than a threshold value among the captured images to be input. **In** addition, "low visibility" indicates a result for an image of which visibility is lower than a threshold value among the captured images to be input.

**In** FIG. 9, a line graph of "only source image" indicates a ground truth rate in a case where the learning model M is generated by using only the source image IM1. **In** addition, a line graph of "using translated image" indicates a ground truth rate in a case where the learning model M is generated by using the source image **IM1** and the training image IM3.

When learning model M is generated by using the training image IM3, the learning accuracy of the correspondence relationship between the image (translated image IM2) of which visibility is lower than the threshold value and the target region (translation target region P2) is improved. Therefore, as illustrated in FIG. 9, the ground truth rate in a case where the captured image of which visibility is lower than the threshold value is input is increased.

**In** addition, since the learning accuracy of the image of which visibility is lower than the threshold value is improved, the overall learning accuracy of the learning model M is improved. For this reason, as illustrated in FIG. 9, the ground truth rate is also high not only in a case where the captured image of which visibility is lower than the threshold value is input but also in a case where a captured image of which visibility is higher than the threshold value is input.

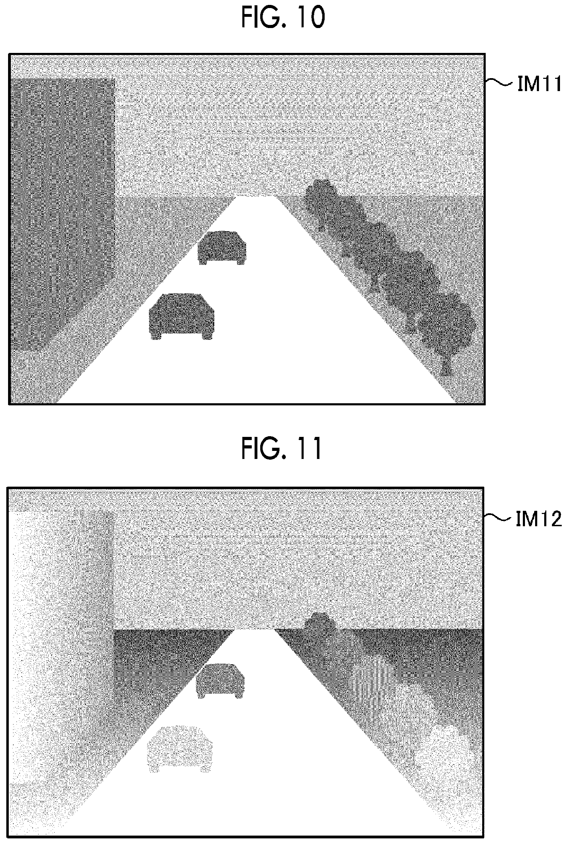

Note that in the above-described embodiment, a case where the information on the target region is, for example, the information on a portion including a predetermined object in the source image is described as an example. However, the present disclosure is not limited to this case. FIGS. 10 and 11 are views illustrating other examples of the source image.

FIG. 10 schematically illustrates an example of an image IM11 recognized by a method called segmentation. The image IM11 illustrated in FIG. 10 represents a region partitioned by an outer contour line or the like of a structure or the like. In the image IM11 illustrated in FIG. 10, it is possible to set each region in the image IM11 such as each portion including a partitioned region, a portion including a boundary between partitioned regions, and the like, and specify information on the target region.

FIG. 11 schematically illustrates an example of an image IM12 recognized by a method called depth. The image IM12 illustrated in FIG. 11 represents a depth in a three-dimensional direction by gradation. In the image IM12, for example, a region corresponding to the depth such as a region having the same depth, a region in which a change rate of the depth is equal to or less than a predetermined value, and a region in which the change rate of the depth is equal to or greater than the predetermined value can be set to specify the information on the target region.

As described above, according to a first aspect of the present disclosure, there is provided a training image generation method including: a translation step S20 of translating a source image IM1 including a target region P1 such that identifiability is lowered to generate a translated image IM2; and a translation target region association step S30 of generating a training image IM3 in which the translated image IM2 and information on a translation target region P2 corresponding to the target region P1 in the translated image IM2 are associated with each other as a correspondence relationship with which a learning model M is trained, information on the target region P1 in the source image IM1 being used as the information on the translation target region P2.

According to this configuration, when the translated image IM2 and the information on the translation target region P2 are associated with each other, since the information on the target region P1 in the source image IM1 of which visibility is higher than the translated image IM2 is used as the information on the translation target region P2, it is possible to generate the training image IM3 with high accuracy in association between the translated image IM2 and the translation target region P2.

According to a second aspect of the present disclosure, in the training image generation method according to the first aspect, the translated image IM2 is an image of which the identifiability is lower than a threshold value, and the source image IM1 is an image of which the identifiability is higher than the threshold value.

According to this configuration, since the translated image IM2 is an image of which identifiability is lower than the threshold value and the source image IM1 is an image of which the identifiability is higher than the threshold value, the information on the target region P1 specified in the source image IM1 of which identifiability is high can be associated with the translated image IM2 of which the identifiability is low. Therefore, the training image IM3 with high accuracy in the association between the translated image IM2 and the translation target region P2 can be generated.

According to a third aspect of the present disclosure, in the training image generation method according to the first aspect or the second aspect, in the translation step S20, a disturbance is added to the source image IM1 to lower the identifiability.

According to this configuration, it is possible to generate the training image IM3 with high accuracy in the association between the translated image IM2 in which the disturbance is added to the source image IM1 to lower the identifiability and the translation target region P2.

According to a fourth aspect of the present disclosure, the training image generation method according to any one of the first aspect to the third aspect further includes: a specifying step S10 of specifying a position and a range of the target region P1 in the source image IM1, in which in the association step S30, the position and the range of the target region P1 specified in the specifying step S10 are associated with the translated image IM2 as information on the target region P1.

According to this configuration, since the position and the range of the target region P1 are associated with the position and the range of the translation target region P2 in the translated image IM2, the target region P1 and the translation target region P2 can be associated with each other with high accuracy.

According to a fifth aspect of the present disclosure, in the training image generation method according to any one of the first aspect to the fourth aspect, the source image IM1 is an image captured by an imaging device.

According to this configuration, it is possible to generate the training image IM3 with high accuracy in the association between the translated image IM2 translated from the source image IM1 captured by the imaging device with the translation target region P2.

According to a sixth aspect of the present disclosure, there is provided a training image generation device 100 including: a translation unit 21 configured to convert a source image IM1 including a target region P1 such that identifiability is lowered to generate a translated image IM2; and an association unit 22 configured to generate a training image IM3 in which the translated image IM2 and information on a translation target region P2 corresponding to the target region P1 in the translated image IM2 are associated with each other as a correspondence relationship with which a learning model M is trained, information on the target region P1 in the source image IM1 being used as the information on the translation target region P2.

According to this configuration, when the translated image IM2 and the information on the translation target region P2 are associated with each other, since the information on the target region P1 in the source image IM1 of which visibility is higher than the translated image IM2 is used as the information on the translation target region P2, it is possible to generate the training image IM3 with high accuracy in association between the translated image IM2 and the translation target region P2.

According to a seventh aspect of the present disclosure, there is provided a training image generation program causing a computer to execute: a translation process of translating a source image IM1 including a target region P1 such that identifiability is lowered to generate a translated image IM2; and an association process of generating a training image IM3 in which the translated image IM2 and information on a translation target region P2 corresponding to the target region P1 in the translated image IM2 are associated with each other as a correspondence relationship with which a learning model M is trained, information on the target region P1 in the source image IM1 being used as the information on the translation target region P2.

According to this configuration, when the translated image IM2 and the information on the translation target region P2 are associated with each other, since the information on the target region P1 in the source image IM1 of which visibility is higher than the translated image IM2 is used as the information on the translation target region P2, it is possible to generate the training image IM3 with high accuracy in association between the translated image IM2 and the translation target region P2.

According to an eighth aspect of the present disclosure, there is provided a learning model generation method including: a training image IM3 generation step of generating a training image IM3 by the training image generation method according to any one of the first aspect to the sixth aspect, and a training step of training the learning model M with the generated training image IM3.

According to this configuration, training is performed by using the training image IM3 with high accuracy in association between the translated image IM2 with the translation target region P2, it is possible to obtain the learning model M capable of estimating a target region included in an input image with high accuracy.

### Reference Signs List

10: Input/output unit
20: Processing unit
21: Translation unit
22: Association unit
30: Storage unit
100: Training image generation device
200: Learning processing device
A1, A2: Preceding vehicle
A4: Target
IM1: Source image
IM2: Translated image
IM3: Training image
IM4: Captured image
IM11, IM12: Image
M: Learning model
P1, P4: Target region
P2: Translation target region

## Claims

1. A training image generation method comprising:
a translation step of translating a source image including a target region such that identifiability is lowered to generate a translated image; and
an association step of generating a training image in which the translated image and information on a translation target region corresponding to the target region in the translated image are associated with each other as a correspondence relationship with which a learning model is trained, information on the target region in the source image being used as the information on the translation target region.

2. The training image generation method according to Claim 1,
wherein the translated image is an image of which the identifiability is lower than a threshold value, and
the source image is an image of which the identifiability is higher than the threshold value.

3. The training image generation method according to Claim 1,
wherein in the translation step, a disturbance is added to the source image to lower the identifiability.

4. The training image generation method according to Claim 1, further comprising:
a specifying step of specifying a position and a range of the target region in the source image,
wherein in the association step, the position and the range of the target region specified in the specifying step are associated with the translated image as the information on the target region.

5. The training image generation method according to Claim 1,
wherein the source image is an image captured by an imaging device.

6. A training image generation device comprising:
a generation unit configured to convert a source image including a target region such that identifiability is lowered to generate a translated image; and
an association unit configured to generate a training image in which the translated image and information on a translation target region corresponding to the target region in the translated image are associated with each other as a correspondence relationship with which a learning model is trained, information on the target region in the source image being used as the information on the translation target region.

7. A training image generation program causing a computer to execute:
a translation process of translating a source image including a target region such that identifiability is lowered to generate a translated image; and
an association process of generating a training image in which the translated image and information on a translation target region corresponding to the target region in the translated image are associated with each other as a correspondence relationship with which a learning model is trained, information on the target region in the source image being used as the information on the translation target region.

8. A learning model generation method comprising:
a training image generation step of generating a training image by the training image generation method according to any one of Claims 1 to 5; and
a training step of training a learning model with the generated training image.
